# DEMANDE DE BREVET EUROPEEN

(11) **EP 0 704 797 A1**
(43) Date de publication de la demande: **03.04.1996**
(21) Numéro de dépôt: 95410114.3
(22) Date de dépôt: 25.09.1995
(51) Int. Cl.: G06F 9/46

(54) **Processeur de commande d'un circuit de compression d'images mobiles**

(30) Priorité: 30.09.1994 FR 9411974
(71) Demandeur: SGS-THOMSON MICROELECTRONICS S.A., F-94250 Gentilly (FR)
(72) Inventeur: Chaisemartin, Philippe, F-38190 Sainte Agnes (FR); Henry, Michel, F-38120 Le Fontanil (FR)
(74) Mandataire: de Beaumont, Michel

(57) **Abrégé**

La présente invention concerne un processeur de commande d'un circuit de compression d'images mobiles du type multi-séquenceur, exécutant des séquences d'instructions d'un programme stocké dans une mémoire morte (1) et propre à gérer des requêtes de rupture de séquence émises via une interface (6), par des unités de traitement et/ou périphériques (U(i)) du circuit, et comportant des moyens logiques associés à un échéancier (11) et destinés à fournir à un compteur-programme (2), une adresse d'un branchement à un sous-programme sur la base d'une requête d'une unité de traitement (U(i)).

## Description

La présente invention concerne un processeur de commande d'un circuit de compression d'images mobiles, telles que des images de télévision.

Un tel processeur est destiné à synchroniser le fonctionnement des différentes unités que comporte le circuit de compression d'images. Ces unités réalisent essentiellement des opérations visant à minimiser le nombre d'informations à transmettre, dans le cadre d'une transmission d'images de télévision et plus particulièrement dans des applications de type vidéophone. Les traitements que font subir ces unités aux images, ou plus exactement à des portions d'images, ne font pas l'objet de la présente invention. Il peut s'agir par exemple d'une unité de comparaison, d'une unité faisant subir une transformée cosinus discrète, directe ou inverse, d'un codeur à longueur variable, etc., ou encore de périphériques du circuit, comme un écran.

Le processeur exécute un programme stocké dans une mémoire morte. Ce programme est généralement divisé en procédures. Chaque procédure est associée à une unité et est capable d'envoyer par l'intermédiaire d'une interface, une commande à cette unité selon son état. Chacune des unités doit pouvoir demander au programme l'exécution d'une séquence particulière d'instructions, ou procédure, la concernant. Elle envoie alors au processeur par l'intermédiaire de l'interface, une requête de branchement, ou saut, dans le programme. Le processeur doit accéder aux différentes requêtes émises par les unités en fonction de leur priorité, chaque unité disposant d'un rang de priorité par rapport à l'ensemble des unités ou périphériques.

Classiquement, un tel processeur ou multi-séquenceur comprend :
- une mémoire morte (ROM) dans laquelle est stocké le programme de fonctionnement du circuit ;
- une mémoire vive (RAM) contenant des registres internes dans lesquels sont stockées les adresses et les données nécessaires au fonctionnement du circuit ;
- un registre d'instruction (IR) destiné à contenir l'instruction courante du programme pendant son interprétation, ce registre étant pourvu de moyens logiques pour décoder les instructions du programme ;
- un compteur-programme (PC) destiné à contenir l'adresse d'une nouvelle instruction à exécuter ;
- une unité arithmétique et logique (ALU) destinée à exécuter des opérations arithmétiques réclamées par le programme ; et
- une interface de communication du multi-séquenceur avec les autres unités et périphériques du circuit de compression d'images mobiles.

Les différents constituants du multi-séquenceur sont reliés entre eux par des bus chargés de véhiculer les adresses, commandes et données nécessaires au bon fonctionnement du programme.

L'invention s'applique plus particulièrement à la gestion des requêtes effectuées par l'intermédiaire de l'interface, par des unités du circuit et demandant une rupture de séquence, ou branchement à un sous-programme, dans l'exécution du programme.

Classiquement le fonctionnement de ces sauts est géré par le programme stocké dans la mémoire morte sur la base du contenu de registres constituant un échéancier (SCH) . Les registres de l'échéancier contiennent des drapeaux positionnés par le processeur lui-même, ou par l'intermédiaire de l'interface, par les unités du circuit. Ces drapeaux sont interprétés par le programme pour déterminer à la fois l'existence des requêtes et la priorité d'une requête par rapport à une autre. Un tel système nécessite un nombre important d'instructions de programme pour la gestion des requêtes. En effet, le programme doit non seulement exécuter des instructions de branchement proprement dites, mais également des instructions de conditions et de tests pour déterminer l'unité ayant établi la requête et disposant de la priorité la plus élevée. Il doit en outre s'assurer que le branchement peut s'effectuer correctement. Cela conduit d'une part à l'occupation d'un volume mémoire important et d'autre part à un temps d'accès aux sous-programmes important. De surcroît, le programme étant stocké dans une mémoire morte, il n'autorise aucune modification de la gestion des sauts.

Plus généralement, l'invention se rapporte à un processeur de commande pourvu d'un échéancier de gestion de requêtes de branchement émises par différentes unités ou périphériques.

L'invention vise à réduire l'occupation de la mémoire morte pour la gestion des requêtes de différentes unités de traitement d'un circuit de compression d'images mobiles et à accroître la vitesse d'exécution du programme.

Pour atteindre cet objet, la présente invention prévoit un processeur de commande d'un circuit de compression d'images mobiles du type multi-séquenceur, exécutant des séquences d'instructions d'un programme stocké dans une mémoire morte et propre à gérer des requêtes de rupture de séquence émises par l'intermédiaire d'une interface, par des unités de traitement et/ou périphériques du circuit, et comportant des moyens logiques associés à un échéancier et destinés à fournir à un compteur-programme, une adresse d'un branchement à un sous-programme sur la base d'une requête d'une unité de traitement.

Selon un mode de réalisation de l'invention, ledit échéancier comporte des registres de stockage des requêtes émises par les différentes unités du circuit.

Selon un mode de réalisation de l'invention, l'échéancier comporte en outre un codeur de priorité constitué de moyens logiques et propre à sélectionner à la lecture des registres de l'échéancier, l'unité de priorité la plus élevée ayant présenté une requête de branchement.

Selon un mode de réalisation de l'invention, l'échéancier comprend huit registres de huit bits, chaque bit représentant un drapeau affecté à une unité et quatre drapeaux étant affectés à chaque unité.

Selon un mode de réalisation de l'invention, le processeur de commande comporte en outre un registre de page propre à contenir une première partie de l'adresse d'un branchement à un sous-programme contenu dans la mémoire morte, une seconde partie de cette adresse étant fournie par le codeur de priorité de l'échéancier.

Selon un mode de réalisation de l'invention, le codeur de priorité délivre les quatre bits de poids faible d'une adresse de branchement qui en comporte douze, les huit bits de poids fort étant délivrés par le registre de page.

Selon un mode de réalisation de l'invention, le processeur de commande comporte un multiplexeur propre à délivrer au compteur-programme une adresse en fonction du type d'instruction, le multiplexeur comportant une première entrée recevant l'adresse précédente du programme incrémentée de 1, une seconde entrée recevant une adresse de branchement direct délivrée par un registre d'instruction et une troisième entrée recevant une adresse représentant la concaténation des bits délivrés par le registre de page et le codeur de priorité.

Selon un mode de réalisation de l'invention, le multiplexeur comporte une quatrième entrée recevant une adresse de branchement indexé dont les huit bits de poids fort sont délivrés par le registre d'instruction et dont quatre bits de poids faible sont délivrés par un accumulateur.

Selon un mode de réalisation de l'invention, le multiplexeur est commandé par une unité arithmétique et logique en fonction de l'existence et du type d'une instruction de branchement.

Selon un mode de réalisation de l'invention, les seize premières adresses de chaque page de la mémoire morte contiennent des instructions de branchement sur des adresses de début de sous-programmes affectées à chaque unité de traitement.

Le fait d'associer à l'échéancier un codeur de priorité câblé, c'est-à-dire basé sur une logique câblée, pour gérer les requêtes de branchement effectuées par les différentes unités du circuit permet de réduire la taille du programme stocké dans la mémoire morte. Par ce biais, cela permet d'accroître la vitesse d'exécution du programme, et donc de fonctionnement du circuit.

En effet, alors que précédemment le programme exécutait une série d'instructions de test et de détermination de priorité pour effectuer un branchement, l'adresse du branchement est désormais calculée par les moyens logiques du codeur de priorité de l'échéancier SCH. En effet, toutes les conditions de branchement se déduisent de la position des drapeaux affectés à chaque unité.

L'occupation de la mémoire morte pour la gestion des requêtes de branchement des unités du circuit est ainsi limitée aux instructions de branchement proprement dites.

L'invention permet également de multiplier la capacité de traitement du processeur en autorisant le recours à une pagination de la mémoire morte. En effet, il est alors possible de prévoir plusieurs modes de fonctionnement pour chaque unité sans pour autant rendre plus complexe la gestion des requêtes de branchement. L'échéancier délivre la même adresse correspondant en fait à m bits de poids faible de l'adresse en mémoire sur n bits. Les n-m bits de poids fort de l'adresse correspondent à la page mémoire dans laquelle est contenu le programme secondaire représentant le mode de fonctionnement souhaité. Le nombre m de bits devant être réservés à l'échéancier dépend du nombre d'unités de traitement que comporte le circuit.

Le recours à des moyens physiques autorise en outre l'ajout d'un nouveau type de branchement permettant encore d'accroître les performances du processeur. En effet, on utilise désormais un multiplexeur pour sélectionner le type de branchement devant être effectué et on peut ainsi réaliser, de manière simple, des branchements indexés sur le contenu d'un accumulateur (ACCU).

L'invention autorise en outre l'exécution de branchements dits "pseudo-indexés" en réduisant le nombre de lignes de programme nécessaires. De fait, lorsque le traitement des données dépend de différentes valeurs prises par une variable donnée, on peut affecter à la valeur de cette variable les m bits de poids faible de l'adresse du branchement en mémoire, les n-m bits de poids fort de l'adresse étant identiques pour tous les branchements. Par une simple concaténation des bits de poids faible à des bits de poids fort qui sont toujours les mêmes, on obtient de manière simple l'adresse du branchement devant être effectué selon la valeur prise par la variable. Cela réduit considérablement le nombre de lignes de programme nécessaires à l'exécution d'un tel type de branchement, et réduit ainsi le temps d'exécution des branchements tout en rendant ce temps identique pour toutes les valeurs prises par la variable.

Ces objets, caractéristiques et avantages ainsi que d'autres de la présente invention seront exposés en détail dans la description suivante de modes de réalisation particuliers faite à titre non limitatif en relation avec les figures jointes parmi lesquelles :
la figure 1 représente schématiquement un mode de réalisation d'un multi-séquenceur selon l'invention d'un circuit de compression d'images mobiles ;
la figure 2 représente schématiquement un mode de réalisation d'un échéancier câblé selon l'invention ; et
la figure 3 représente schématiquement un mode d'organisation d'une mémoire morte d'un multi-séquenceur selon l'invention.

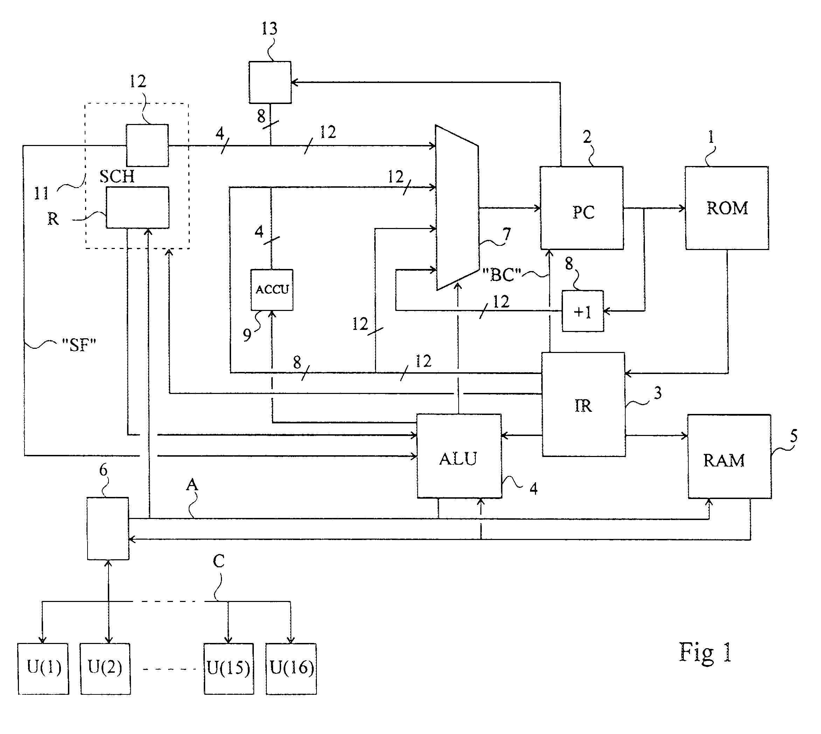

Le processeur multi-séquenceur selon l'invention, représenté à la figure 1, est destiné à commander l'ensemble des opérations exécutées par différentes unités de traitement d'un circuit de compression d'images mobiles ou ses périphériques.

Pour des raisons de clarté, seules les connexions nécessaires à la compréhension de l'invention ont été représentées. En particulier, les différents bus ne figurent pas sur cette figure de même que les signaux d'horloges et d'alimentation. Il sera à la portée de l'homme de l'art de déduire de la présente description exposant les liaisons fonctionnelles entre différents constituants, l'architecture physique du processeur et notamment des bus d'adresse, de données et de contrôle.

Une mémoire morte (ROM) 1 contient le programme de fonctionnement du circuit sous forme de séquences d'instructions, ou sous-programmes. Cette mémoire morte 1 reçoit d'un compteur-programme, ou compteur ordinal, (PC) 2 l'adresse dans laquelle doit être lue la prochaine instruction. La mémoire morte 1 délivre les instructions à un registre d'instruction (IR) 3 chargé de décoder par des moyens logiques l'instruction reçue. Ce registre d'instruction 3 délivre, le cas échéant, une adresse de branchement contenue dans l'instruction lue. Il peut également envoyer à une unité arithmétique et logique (ALU) 4, un opérande immédiat contenu dans l'instruction et à une mémoire vive (RAM) 5, une adresse de registre de données contenue dans l'instruction. La mémoire vive 5 délivre la donnée correspondante à l'unité arithmétique et logique 4 ou, par l'intermédiaire d'une interface 6, à une unité ou périphérique U(i) du circuit. L'unité arithmétique et logique 4 envoie le résultat de l'opération arithmétique qu'elle réalise au compteur-programme 2 ou à la mémoire vive 5.

Le compteur-programme 2 est associé à un multiplexeur 7, destiné à sélectionner l'adresse sur douze bits de la prochaine instruction en fonction du type d'instruction de branchement en cours.

Ce multiplexeur 7 reçoit différentes adresses sur douze bits. Une première adresse lui est délivrée par un incrémenteur 8 de l'adresse courante. Cette adresse est sélectionnée en l'absence de branchement pour que le programme se déroule ligne à ligne. Une seconde entrée reçoit par l'intermédiaire du registre d'instruction 3, une adresse de branchement direct contenue dans une ligne d'instruction du programme. Une troisième entrée reçoit une adresse de branchement indexé. Cette adresse correspond à la concaténation de huit bits de poids fort envoyés par le registre d'instruction 3 et de quatre bits de poids faible provenant d'un accumulateur (ACCU) 9. Cet accumulateur 9 est chargé par l'unité arithmétique et logique 4 et contient le résultat de la dernière opération effectuée. Une quatrième entrée reçoit une adresse de branchement sur requête.

La sélection de l'adresse par le multiplexeur 7 est effectuée par un signal de commande issu de l'unité arithmétique et logique 4 et correspondant au type d'instruction de branchement, par exemple de branchement conditionnel (branchement si égal, si supérieur, si inférieur, etc.). Toute instruction de branchement contenue dans le programme conduit donc à délivrer au compteur-programme 2, une adresse absolue sur douze bits. De la sorte, celui-ci n'a pas à effectuer d'opérations particulières pour calculer l'adresse de l'instruction suivante devant être lue dans la mémoire morte 1. L'incrémenteur 8 n'a pas de contraintes de rapidité dans la mesure où le processeur n'attend pas de connaître le type d'instruction pour procéder au calcul d'adresse. Grâce à l'emploi du multiplexeur 7, les adresses peuvent être calculées en permanence par les différents constituants qui sont chargés de délivrer une adresse sur une des entrées du multiplexeur 7.

L'appel sur requête aux différentes procédures, ou sous-programmes, est géré par un module particulier appelé échéancier câblé (SCH) 11. Cet échéancier 11 vérifie les demandes des différentes unités U(i) et renvoie une valeur qui correspond à l'unité U(i) qui a envoyé une demande avec la plus haute priorité.

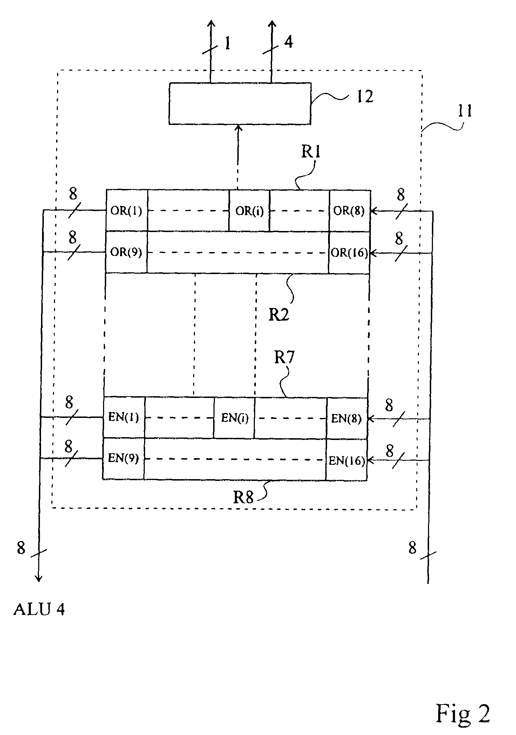

L'échéancier câblé 11 délivre par l'intermédiaire d'un codeur de priorité 12, les quatre bits de poids faible de l'adresse de la mémoire morte 1 contenant la première instruction de la séquence devant être exécutée. Le codeur de priorité 12 est de type à portes logiques. Il délivre en fonction du contenu de huit registres R1, ..., R8 (figure 2) de l'échéancier 11, les quatre bits de la partie de l'adresse correspondant à l'unité U(i) considérée. Les huit bits de poids fort de cette adresse sont délivrés par un registre de page 13 dont le contenu représente la page mémoire de la mémoire morte 1 dans laquelle doit s'effectuer le branchement. Ce registre de page 13 est géré par le compteur-programme 2 en fonction de conditions de branchement "BC" qu'il reçoit du registre d'instruction 3.

Les registres R1, ..., R8 de l'échéancier 11 stockent les requêtes de branchement envoyées par l'intermédiaire de l'interface 6, par les différentes unités U(i) du circuit jusqu'à ce qu'elles soient traitées par le processeur. Ces registres sont destinés à contenir des drapeaux propres à chaque unité de traitement ou périphérique U(i) du circuit permettant au codeur de priorité 12 de délivrer l'adresse d'un éventuel branchement sur requête.

Dans l'exemple représenté, ces drapeaux sont au nombre de quatre par unité, soit un mot de quatre drapeaux par unité. L'échéancier 11 est prévu pour pouvoir gérer seize unités U(i), ce qui conduit à soixante-quatre bits répartis dans huit registres de huit bits. Trois de ces drapeaux sont positionnés par le processeur lui-même en fonction du déroulement du programme. Un premier drapeau EN(i) est levé par l'unité arithmétique et logique 4 lorsque qu'un branchement est autorisé par le programme. Deux autres drapeaux DR(i) et BF(i) correspondent respectivement à un drapeau de "données prêtes" et de "registre tampon libre". Ils sont positionnés par le processeur en fonction de l'état des données et d'un registre tampon (non représenté) de l'interface 6. Un quatrième drapeau OR(i) est levé lorsque l'unité correspondante U(i) envoie par l'intermédiaire de l'interface 6, une requête de branchement. Un drapeau est levé lorsque le bit y afférent est positionné à 1 et baissé lorsque ce bit est positionné à 0. Tous les drapeaux d'un même type, par exemple OR(1), ..., OR(i), ..., OR(16), représentent un mot de seize bits. Ce mot est contenu dans deux des huit registres de l'échéancier 11. Les huit registres R1, ..., R8 de l'échéancier 11 sont accessibles par l'unité arithmétique et logique 4 comme des registres standards.

Pour permettre au processeur, plus précisément à l'unité arithmétique et logique 4, de positionner les trois premiers drapeaux EN(1), DR(i), BF(i), on prévoit deux instructions spéciales de positionnement de ces drapeaux. Il s'agit d'instructions de positionnement à 1, positionnement à 0, d'un ou plusieurs bits des registres R1 à R8 et utilisées par le programme. Ce positionnement s'effectue par mots de huit bits en utilisant un bus interne A, deux mots étant affectés à un type de drapeau.

Le positionnement des drapeaux OR(i) par les unités U(i) s'effectue également par mot de huit bits par le bus interne A, au cours d'une séquence de chargement de l'échéancier 11 contenue dans le programme. Cette séquence consiste tout d'abord à envoyer, via l'interface 6, une adresse de registre R1 sur un bus C du circuit. Puis, le processeur attend que huit premières unités aient répondu en positionnant chacune un des huit bits du mot à charger dans le registre R1. Enfin, il envoie une adresse de registre R2 pour que les huit autres unités positionnent leur drapeau respectif.

L'adresse du registre R1, ..., R8 dans lequel l'unité arithmétique et logique doit écrire un mot de drapeaux est envoyée par le registre d'instruction 3 à l'échéancier 11.

Pour que le codeur de priorité 12 délivre une adresse de branchement, il faut qu'au moins une des unités U(i) ait ses quatre drapeaux levés (positionnés à 1). Le codeur 12 fournit alors l'adresse de l'unité considérée et, au cas où plusieurs unités U(i) ont leurs quatre drapeaux levés, de celle ayant la priorité la plus élevée. Le codeur de priorité 12 délivre également un drapeau de sélection "SF" à l'unité arithmétique et logique. Ce drapeau de sélection "SF" sert à indiquer qu'un branchement sur requête est prêt à être exécuté. Il permet à l'unité arithmétique et logique 4 de sélectionner l'entrée du multiplexeur 7 dès qu'une instruction demandant l'existence d'un branchement sur requête apparaît. Le codeur 12 examine en permanence les seize mots de drapeaux associés à chaque unité U(i) de sorte que l'adresse d'un branchement sur requête est prête dès que le programme est disponible pour l'exécuter.

A chaque cycle, le codeur 12 délivre l'adresse de l'unité U(i) dont la priorité est la plus élevée et dont tous les drapeaux EN(i), DR(i), BF(i) et OP(i) sont levés. En fait, le codeur 12 délivre le rang de l'unité U(i) dans une table d'instructions de branchement placée en début du programme. Le codeur 12 délivre une adresse sur quatre bits, correspondant aux quatre bits de poids faible de l'adresse en mémoire, tandis que le registre de page 13 contient une adresse sur huit bits, correspondant aux huit bits de poids fort de l'adresse en mémoire. L'adresse du branchement est obtenue par concaténation des adresses issues du registre de page 13 et du codeur 12.

Les seize premières lignes d'un programme, ou d'un programme secondaire en cas de plusieurs modes de fonctionnement possibles par unité, contiennent donc une table d'instructions de branchement. A chaque rang, ou ligne, de la table est associée l'adresse d'un branchement direct sur une séquence relative à une unité U(i). Le registre de page 13 contient l'adresse de la page contenant le programme secondaire du mode de fonctionnement considéré. En délivrant le rang de la table qui correspond à l'unité U(i), le codeur 12 permet un branchement direct sur la séquence voulue dès le prochain cycle.

Pour optimiser le fonctionnement du circuit, on préfère, à l'initialisation du circuit, charger le compteur-programme 2 avec la plus haute, ou dernière, adresse de la mémoire morte 1. Cette adresse contient alors une instruction de branchement direct sur le début du programme. Ceci permet de préserver les seize premières adresses de la mémoire morte 1 pour la table d'instructions de branchement direct aux différents sous-programmes associés à chaque unité U(i).

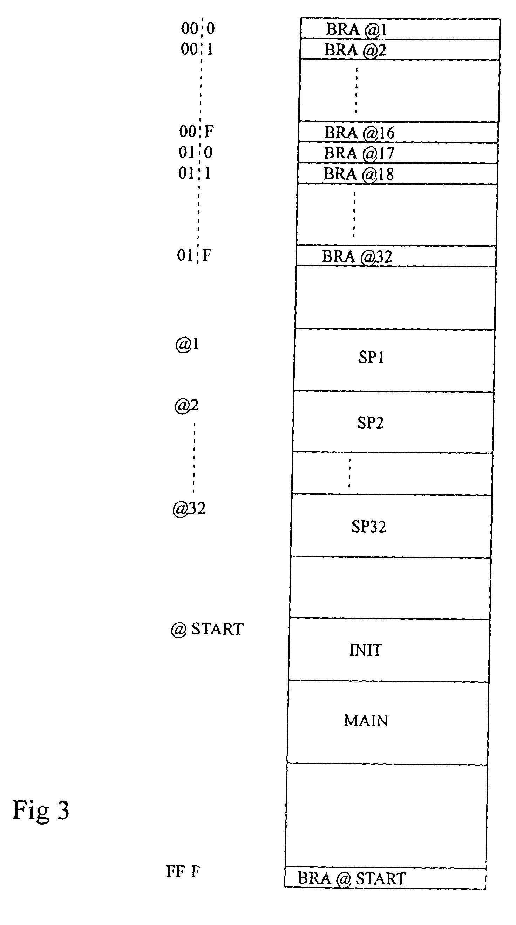

La figure 3 illustre un mode d'organisation de la mémoire morte qui peut être utilisé pour optimiser l'adressage de la mémoire contenant le programme de fonctionnement du circuit.

Pour des raisons de clarté, les adresses sont indiquées en notation hexadécimale et on suppose dans cet exemple que chaque unité n'a que deux modes de fonctionnement possibles.

La dernière adresse FFF de la mémoire contient une instruction de branchement direct BRA @ START sur le début du programme. Les adresses qui suivent l'adresse @ START contiennent la ou les procédures d'initialisation INIT, notamment les instructions d'initialisation du registre de page 13, puis le corps du programme principal MAIN avec les boucles d'appel à l'échéancier 11.

Les seize premières adresses 000 à 00F de la mémoire morte 1 contiennent une première table d'instructions BRA @ 1 à BRA @ 16 de branchement direct aux sous-programmes associés aux différentes unités selon un premier mode de fonctionnement. Les huit bits de poids fort de ces adresses (soit 00 en hexadécimal) correspondent à la première page de la mémoire. Les seize adresses suivantes contiennent une seconde table d'instructions BRA @ 17 à BRA @ 32 de branchement direct aux sous-programmes associés aux différentes unités selon un second mode de fonctionnement. Les huit bits de poids fort de ces adresses (soit 01 en hexadécimal) correspondent à la seconde page de la mémoire. Les quatre bits de poids faible (soit 0 à F en hexadécimal) de chacune des adresses de ces deux premières pages sont affectés à une unité U(i).

Viennent ensuite les sous-programmes SP1 à SP32 associés aux unités U(i) selon leur mode de fonctionnement. On peut considérer que les sous-programmes SP1 à SP16 dont les instructions démarrent respectivement aux adresses @1 à @16 définies par la première table, correspondent à un premier programme secondaire. De même, on peut considérer que les sous-programmes SP17 à SP32 dont les instructions démarrent respectivement aux adresses @17 à @32 définies par la seconde table, correspondent à un second programme secondaire.

Pour le cas où le processeur ne devrait traiter qu'un seul mode de fonctionnement, on pourrait se dispenser d'avoir recours à un registre de page, un branchement sur requête ne pouvant affecter qu'une seule séquence par unité U(i). Le codeur de priorité 12 pourrait alors délivrer l'adresse complète du branchement. On préfèrera cependant conserver la même méthode pour ne pas compliquer la logique du codeur de priorité. Ce dernier calculera le rang de l'unité dans la table correspondant au poids faible de l'adresse. Dans ce cas, le poids fort de l'adresse ne varie pas et correspond de préférence à la première adresse de la mémoire morte 1.

Le codeur de priorité 12 étant réalisé en logique câblée, les priorités affectées aux mots de drapeaux ainsi que le rang de l'adresse dans la table de branchements renvoyée par le codeur 12, ne sont pas modifiables. Par contre, il suffit de changer la position affectée à une unité U(i) dans les registres R1 à R8 de l'échéancier 11 pour changer la priorité qui lui est associée.

Le contenu des registres R1 à R8 peut être envoyé à l'unité arithmétique et logique 4 comme cela est représenté sur les figures. Bien que cette connexion ne soit pas nécessaire au fonctionnement du processeur, elle peut se révéler utile pour effectuer des procédures de tests de fonctionnement.

Bien entendu, la présente invention est susceptible de diverses variantes et modifications qui apparaîtront à l'homme de l'art. En particulier, chacun des composants décrits (multiplexeur, registres R1 à R8, moyens logiques du codeur 12, etc.) pourra être remplacé par un ou plusieurs éléments remplissant la même fonction.

De plus, bien que la présente description ait été faite sur la base de 16 unités U(i), ce nombre peut être quelconque en fonction des besoins du circuit. Il est fixé par le nombre de bits d'adresse réservés au codeur de priorité 12. Avec quatre bits, cela autorise déjà 32 unités, il suffit pour cela d'augmenter le nombre de registres de l'échéancier 11. Dans le même ordre d'idée, l'invention a été exposée sur la base d'adresses sur douze bits et de registres huit bits de l'échéancier SCH. Elle peut également être transposée à un nombre quelconque de bits pour les adresses et pour les registres.

En outre, bien qu'il ait été fait référence à des unités physiques par souci de clarté de l'exposé, une unité au sens de la présente invention peut correspondre à une procédure particulière U(i) d'une unité physique. Par exemple, dans le cas d'une unité réalisant une transformée cosinus discrète, une première procédure correspond au chargement des données devant subir la transformation dans l'unité. Une seconde procédure correspond à l'extraction du résultat fourni par cette unité. Dans un tel cas, plusieurs mots de drapeaux sont affectés à une même unité physique, chaque mot étant affecté à une des procédures U(i) de l'unité.

## Revendications

1. Processeur de commande d'un circuit de compression d'images mobiles du type multi-séquenceur, exécutant des séquences d'instructions d'un programme stocké dans une mémoire morte (1) et propre à gérer des requêtes de rupture de séquence émises par l'intermédiaire d'une interface (6), par des unités de traitement et/ou périphériques (U(i)) du circuit, caractérisé en ce qu'il comporte des moyens logiques associés à un échéancier (11) et destinés à fournir à un compteur-programme (2), une adresse d'un branchement à un sous-programme sur la base d'une requête d'une unité de traitement (U(i)).

2. Processeur de commande selon la revendication 1, caractérisé en ce que ledit échéancier (11) comporte des registres (R) de stockage des requêtes émises par les différentes unités (U(i))du circuit.

3. Processeur de commande selon la revendication 2, caractérisé en ce que l'échéancier (11) comporte en outre un codeur de priorité (12) constitué de moyens logiques et propre à sélectionner à la lecture des registres (R) de l'échéancier (11), l'unité (U(i)) de priorité la plus élevée ayant présenté une requête de branchement.

4. Processeur de commande selon la revendication 3, caractérisé en ce que l'échéancier (11) comprend huit registres (R1, ..., R8) de huit bits, chaque bit représentant un drapeau affecté à une unité (U(i)), et quatre drapeaux (EN(i), DR(i), BF(i), OR(i)) étant affectés à chaque unité (U(i)).

5. Processeur de commande selon la revendication 3 ou 4, caractérisé en ce qu'il comporte en outre un registre de page (13), propre à contenir une première partie de l'adresse d'un branchement à un sous-programme contenu dans la mémoire morte (1), une seconde partie de cette adresse étant fournie par le codeur de priorité (12) de l'échéancier (11).

6. Processeur de commande selon la revendication 5, caractérisé en ce que le codeur de priorité (12) délivre les quatre bits de poids faible d'une adresse de branchement qui en comporte douze, les huit bits de poids fort étant délivrés par le registre de page (13).

7. Processeur de commande selon revendication 5 ou 6, caractérisé en ce qu'il comporte un multiplexeur (7) propre à délivrer au compteur-programme (2) une adresse en fonction du type d'instruction, le multiplexeur (7) comportant une première entrée recevant l'adresse précédente du programme incrémentée de 1, une seconde entrée recevant une adresse de branchement direct délivrée par un registre d'instruction (3) et une troisième entrée recevant une adresse représentant la concaténation des bits délivrés par le registre de page (13) et le codeur de priorité (12).

8. Processeur de commande selon la revendication 7, caractérisé en ce que le multiplexeur (7) comporte une quatrième entrée recevant une adresse de branchement indexé dont les huit bits de poids fort sont délivrés par le registre d'instruction (3) et dont quatre bits de poids faible sont délivrés par un accumulateur (9).

9. Processeur de commande selon la revendication 7 ou 8, caractérisé en ce que le multiplexeur (7) est commandé par une unité arithmétique et logique (4) en fonction de l'existence et du type d'une instruction de branchement.

10. Processeur de commande selon l'une quelconque des revendications 5 à 9, caractérisé en ce que les seize premières adresses de chaque page de la mémoire morte (1) contiennent des instructions de branchement sur des adresses de début de sous-programmes affectées à chaque unité de traitement (U(i)).
